# EUROPEAN PATENT APPLICATION

(11) **EP 1 840 713 A2**
(43) Date of publication of application: **03.10.2007**
(21) Application number: 07102892.2
(22) Date of filing: 22.02.2007
(51) Int. Cl.: G06F 3/033

(54) **Wheel input device and method for four-way key stroke in portable terminal**

(30) Priority: 31.03.2006 KR 20060029286
(71) Applicant: Samsung Electronics Co., Ltd., Suwon-si, Gyeonggi-Do (KR)
(72) Inventor: Moon, Byoung Seoup, Gyeonggi-do (KR)
(74) Representative: Grünecker, Kinkeldey, Stockmair & Schwanhäusser Anwaltssozietät

(57) **Abstract**

A wheel input device and a method thereof enable a four-way key stroke, space saving, effective key arrangement, and suitability for existing operating systems or application programs by using a scroll wheel. A direction change button may be used to control the directional property of the scroll wheel. By rotating the scroll wheel in the up/down direction after clicking the direction change button, a cursor on a screen display unit moves in the right/left direction differently from its initial function. By clicking the direction change button once again, the function of the scroll wheel returns to its initial function. A specific function may be set for a long click of the direction change button. Alternatively, a click identification unit may be used, instead of the direction change button, to provide a four-way key stroke.

## Description

### BACKGROUND OF THE INVENTION

### Field of the Invention

The present invention generally relates to a wheel input device of a portable terminal and a method thereof, and more particularly, to a method enabling a four-way key stroke of a scroll wheel installed in a portable terminal.

### Description of the Prior Art

Recent developments in circuit integration technology of semiconductors and in information and communication technology have resulted in common use of personal portable terminals, such as mobile phones, personal digital assistants (PDAs), etc. Input devices, such as keypads, touch screens, joysticks, scroll wheels, etc., are generally used for portable terminals. Joysticks or scroll wheels are increasingly being used for portable terminals emphasizing messaging. This trend reflects requirements for a fast and convenient user interface.

A scroll wheel (also referred to as a track wheel or a wheel key) is a kind of input device typically providing three functions, such as an up/down movement and confirmation. The scroll wheel adopts a method of rotating a wheel in the forward and backward directions with a user's fingers, and has a structure to control software by generating a fast and correct key event. Conventional technologies on the scroll wheel are disclosed, for example, in U.S. Patent Application Publication No. 20050190146 A1, published September 1, 2005 and assigned to Research in Motion, and U.S. Patent Application Publication No. 20060007129, published January 12, 2006 and assigned to Research in Motion.

In order to use a scroll wheel, operating systems or application programs of a portable terminal must provide a user interface optimized for the operation of the scroll wheel. However, conventional operating systems and application programs are generally not prepared for the operation of the scroll wheel, as the user interface is normally designed for four movement keys operating in four directions, and therefore the conventional scroll wheel itself does not fulfill a four-way key stroke as a minimum directional movement function. The scroll wheel disclosed in the above U.S. Patent Application Publications basically provides only three functions of up/down movement and confirmation.

However, U.S. Patent No. 6,700,564 B2, issued March 2, 2004 and assigned to Microsoft, discloses a technology for a scroll wheel enabling a four-way key stroke. This technology provides a right/left key stroke by moving a scroll wheel, installed in a mouse or a keyboard, sideways. However, in order to apply the conventional technology, the scroll wheel must have sufficient space to move sideways. Therefore, the conventional technologies are not suitable for portable terminals, because space saving is one of the important points in the design of portable terminals.

### SUMMARY OF THE INVENTION

The present invention has been made in view of the above problems, and an object of the present invention is to provide a wheel input device of a portable terminal enabling a four-way key stroke, and a method thereof.

Another object of the present invention is to provide a wheel input device of a portable terminal enabling space saving and effective key arrangement, and a method thereof.

Another object of the present invention is to provide a wheel input device of a portable terminal suitable for existing operating systems or application programs, and a method thereof.

In order to achieve the above objects, a wheel input device of a portable terminal according to the present invention is installed in a main body of the portable terminal, and includes a scroll wheel and a direction change button. A portion of the scroll wheel is mounted in the main body, and another portion of the scroll wheel protrudes outside the main body. The scroll wheel is rotated in an up/down direction and is pushed towards the main body by applying a force. The direction change button, for controlling a directional property of the scroll wheel, is located adjacent to the scroll wheel, and a portion of the direction change button protrudes outside the main body.

Preferably, the wheel input device for the portable terminal further includes a wheel rotation sensor for detecting and outputting a rotation input of the scroll wheel; a wheel click sensor for detecting and outputting a click input of the scroll wheel; a button click sensor for detecting and outputting a click input of the direction change button; a control unit for controlling movement of a cursor or performing a specific function corresponding to the outputs from the wheel rotation sensor and the wheel click sensor; and a movement direction decision unit for deciding to change a movement direction of the cursor corresponding to the output from the button click sensor, and transmitting the decision information on the movement direction to the control unit.

Preferably, the scroll wheel and the direction change button may be installed at a front surface or a side surface of the main body.

The control unit controls the movement direction of the cursor in a first direction by receiving the output of the wheel rotation sensor, and controls the movement direction of the cursor in a second direction by receiving the decision information on the movement direction from the movement direction decision unit. The first direction is an up/down direction, and the second direction is a right/left direction.

A wheel input method for a portable terminal according to the present invention includes inputting a button click with a direction change button; detecting and outputting a button click input with a button click sensor; deciding to change the movement direction of a cursor from a first direction to a second direction according to the reception of an output from the button click sensor by a movement direction decision unit, and transmitting the decision information to a control unit; inputting wheel rotation with a scroll wheel; detecting and outputting the wheel rotation input with a wheel rotation sensor; and controlling, by the control unit, the cursor movement in the second direction according to the movement direction decided by the movement direction decision unit based on the received output of the wheel rotation sensor.

The wheel input method further includes, between the step of detecting and outputting the button click input and the step of deciding to change the movement of a cursor: identifying with the button click sensor whether the button click input has continued for a predetermined time; and performing, if the button click input has continued for the predetermined time, a specific function by the control unit. If the button click input has not continued for the predetermined time, the step of deciding to change the movement direction of a cursor is performed.

Preferably, the first direction is an up/down direction, and the second direction is a right/left direction.

The wheel input method according to the present invention further includes after the step of controlling the cursor movement, the step of deciding, if a button click is input again with the direction change button, to change the cursor movement direction from the second direction to the first direction with the movement direction decision unit.

A wheel input device of a portable terminal according to the present invention includes a scroll wheel, wheel rotation sensor, wheel click sensor, wheel click identification unit, movement direction decision unit, and control unit. A portion of the scroll wheel is mounted in a main body, and another portion of the scroll wheel protrudes outside the main body. The scroll wheel is rotated in an up/down direction and is pushed towards the main body by applying a force. The rotation sensor detects and outputs a rotation input of the scroll wheel, and the wheel click sensor detects and outputs a click input of the scroll wheel. The wheel click identification unit identifies a type of the click input by receiving an output from the wheel click sensor. The movement direction decision unit decides, if the click input from the wheel click identification unit is a click type allocated with a movement direction change, to change a cursor movement direction and transmits the decision information on the movement direction. The control unit controls the cursor movement or performs a specific function corresponding to the outputs from the wheel rotation sensor and movement direction decision unit.

Preferably, the click type includes a short click, long click, and double click. The click type allocated with the movement direction change is selected from one of a short click, long click, and double click.

Preferably, the scroll wheel may be installed at a front surface or a side surface of the main body.

The control unit controls the cursor movement in a first direction by receiving the output of the wheel rotation sensor, and controls the movement direction of the cursor in a second direction by receiving the decision information on the movement direction from the movement direction decision unit. Preferably, the first direction is an up/down direction, and the second direction is a right/left direction.

A wheel input method for a portable terminal according to the present invention includes inputting a wheel click with the scroll wheel; detecting and outputting the wheel click input with a wheel click sensor; identifying the type of the wheel click input by a wheel click identification unit according to reception of the output from the wheel click sensor, and transmitting the click type information to a movement direction decision unit; deciding, by the movement direction decision unit, to change a cursor movement direction from a first direction to a second direction and transmitting the decision information to a control unit, if the click type is a click allocated with a movement direction change; inputting wheel rotation with the scroll wheel; detecting and outputting the wheel rotation input with a wheel rotation sensor; and controlling the cursor movement in the second direction by the control unit according to reception of the output from the wheel rotation sensor and of the decision information on the movement direction from the movement direction decision unit.

The step of identifying the type of the wheel click input further includes identifying with the wheel click identification unit whether the wheel click input has continued for a predetermined time; and checking, if the wheel click input has not continued for the predetermined time, whether a double click is input. If the wheel click input is not a double click, the step of deciding to change the cursor movement direction is performed. The wheel input method further includes performing, if the wheel input has continued for the predetermined time, a specific function by the control unit.

The click type information in the step of identifying the type of the wheel input click input includes a short click, long click, and double click. The click type allocated with a movement direction change in the step of deciding to change the cursor movement may be selected from one of a short click, long click, and double click.

Preferably, the first direction is an up/down direction, and the second direction is a right/left: direction.

The wheel input method according to the present invention further includes, after the step of controlling the cursor movement, the step of deciding, if a wheel click is input again by the scroll wheel and the wheel click type is the click allocated with the movement direction change, to change the cursor movement direction from the second direction to the first direction by the movement direction decision unit.

### BRIEF DESCRIPTION OF THE DRAWINGS

The above and other objects, features and advantages of the present invention will become more apparent from the following detailed description in conjunction with the accompanying drawings, in which:
FIG. 1 is a front view showing a portable terminal equipped with a wheel input device according to the present invention;
FIG. 2 is a front view showing a portable terminal equipped with a wheel input device according to the present invention;
FIG. 3 is a block diagram showing a configuration of a wheel input device according to the present invention;
FIG. 4A is a flow chart showing a wheel input method using the wheel input device illustrated in FIG. 3 **[FIG. 4 SHOULD BE LABELED "FIG. 4A"];**
FIG. 4B a flow chart showing a modified example of the method shown in FIG. **4A [FIG. 4A SHOULD BE LABELED "FIG. 4B"];**
FIG. 5 is a block diagram showing a configuration of a wheel input device according to the present invention;
FIG. 6A is a flow chart showing a wheel input method using the wheel input device illustrated in FIG. 5 **[FIG. 6 SHOULD BE LABELED "FIG. 6A"];** and
FIG. 6B is a flow chart showing the step of identifying a click type illustrated in FIG. 6A **[FIG. 6A SHOULD BE LABELED "FIG. 6B"]**.

### DETAILED DESCRIPTION OF THE PREFERRED EMBODIMENTS

Hereinafter, preferred embodiments of the present invention are described in detail with reference to the accompanying drawings. The same reference numbers are used for the same or like components in the accompanying drawings. Additionally, detailed explanations for well-known functions and compositions are omitted to avoid obscuring the present invention.

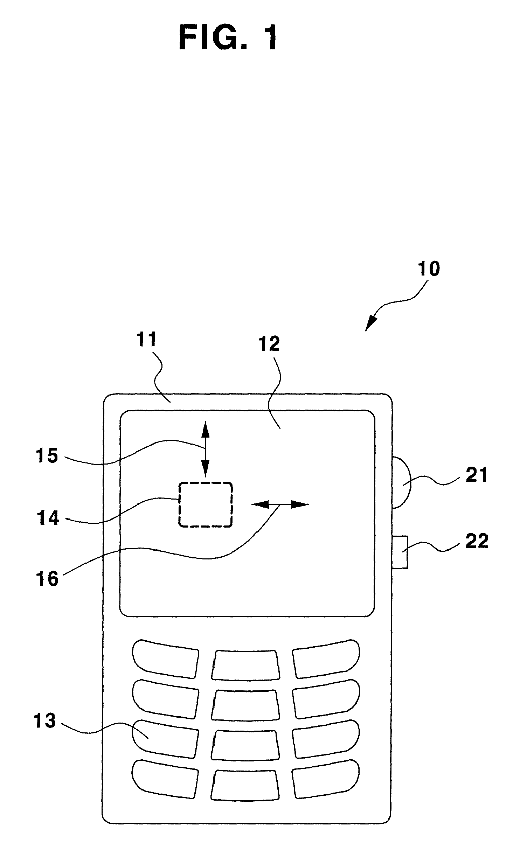

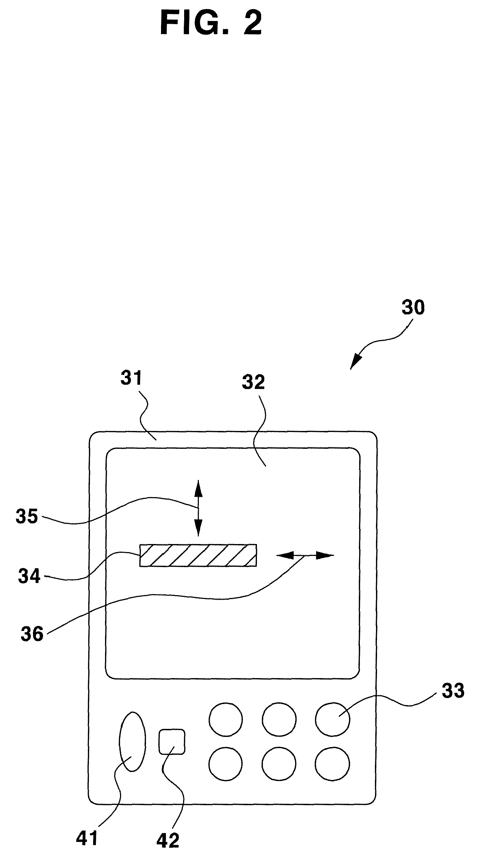

Referring to FIGs. 1 and 2, the portable terminals 10 and 30 include conveniently portable electronic instruments, such as mobile phones, PDAs, portable multimedia players (PMPs), etc., which have functions, such as information processing, information providing, communication, etc.

Main bodies 11 and 31 of the respective terminals 10 and 30 have a shape of a thin rectangular parallelepiped having a front surface, rear surface, and side surfaces, or a similar shape thereto. Screen display units 12 and 32 and keypads 13 and 33 are disposed on the front surfaces of the corresponding main bodies 11 or 31.

The screen display units 12 and 32 display a function menu of the associated terminal, content of a user's input, result of information processing, and content of information service. A liquid crystal display (LCD) is generally used as the screen display unit. Cursors 14 and 34, moving in the up/down directions 15 and 35, or in the right/left directions 16 and 36 according to a key stroke, are normally displayed on the corresponding screen display unit 12 or 32.

The keypads 13 and 33 are input devices for operation of the corresponding terminal 10 or 30, and are configured to include number/character combination keys, direction movement keys, function keys, or the like. Alternative input devices may be provided in the form of a touch screen installed on the screen display units 12 and 32, or a joystick installed on the front surfaces of the main bodies 11 and 31.

In FIG. 1, a scroll wheel 21 and a direction change button 22 are installed on a side surface of the main body 11. In FIG. 2, a scroll wheel 41 and a direction change button 42 are installed on the front surface of the main body 31. The scroll wheels 21 and 41 have a disc shape of which a portion is installed in the main bodies 11 and 31 respectively, and another portion protrudes outwards. The scroll wheels 21 and 41 may be rotated in the up/down direction or be pushed towards the main bodies by applying a force. If the scroll wheels 21 and 41 are rotated in the up/down direction, the cursors 14 and 34, respectively, of the screen display units 12 and 32, move in the conventional up/down directions 15 and 35. By pushing the scroll wheels 21 and 41 towards the main body, a conventional function of a confirmation key is performed (for example, selection or execution of an item located under the cursor 14 or 34).

The direction change buttons 22 and 42 are located at any position (e.g. up/down/right/left) adjacent to the respective scroll wheels 21 and 41, and a portion of the button protrudes outside the corresponding main body 11 or 31. The direction change buttons 22 and 42 control a directional property of the respective scroll wheel 21 or 41. If the scroll wheels 21 and 41 are rotated in the up/down direction after clicking the corresponding direction change buttons 22 and 42, the cursors 14 and 34 of the corresponding screen display units 12 and 32 move in the right/left directions 16 and 36, which is different from conventional technology. If the direction change buttons 22 and 42 are clicked again, the function of the scroll wheels 21 and 41 returns to the original function of the up/down movement key. When a long click occurs, the direction change buttons 22 and 42 may be configured to perform a specific function such as cancellation.

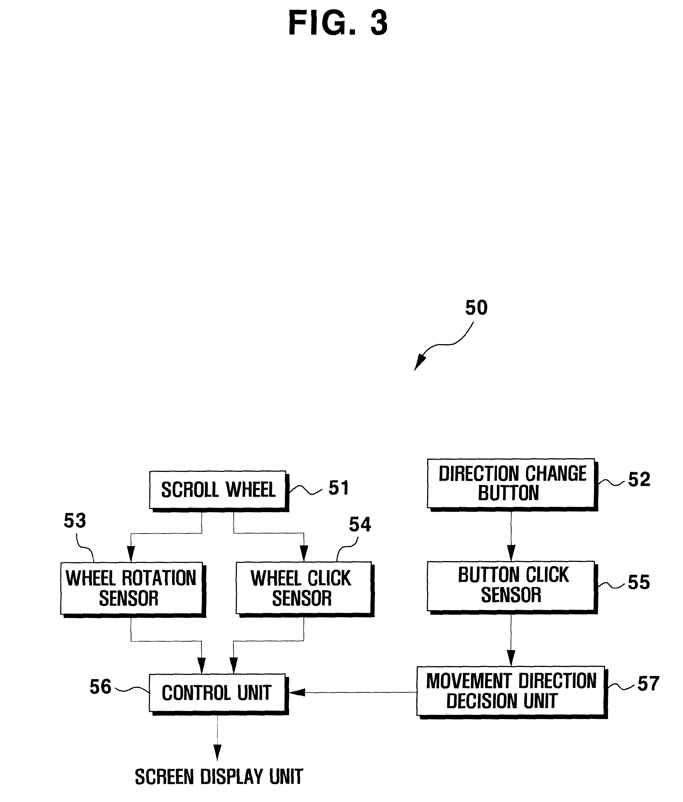

FIG. 3 is a block diagram showing a configuration of a wheel input device 50 according to the present invention.

The wheel input device 50 includes a scroll wheel 51, direction change button 52, wheel rotation sensor 53, wheel click sensor 54, button click sensor 55, control unit 56, and movement direction decision unit 57.

The scroll wheel 51 and direction change button 52 have the same structure and function as the scroll wheels 21 and 41 and the direction change buttons 22 and 42 shown in associated FIGs. 1 and 2. The wheel rotation sensor 53, wheel click sensor 54, and button click sensor 55 are installed in a main body of a terminal, and have a conventional structure to perform individual specific functions. The wheel rotation sensor 53 detects rotation of the scroll wheel 51, and outputs an electric signal by converting the rotation to the electric signal. The wheel click sensor 54 and button click sensor 55 detect clicks of the scroll wheel 51 and direction change button 52 respectively, and output electric signals by converting the clicks to the electric signals.

The electric signals output by the wheel rotation sensor 53 and wheel click sensor 54 are transmitted to the control unit 56. The electric signal output by the button click sensor 55 is transmitted to the movement direction decision unit 57. The control unit 56 controls movement of a cursor or performs a confirmation function by receiving electric signals corresponding to the rotation or click of the scroll wheel 51. The movement direction decision unit 57 decides to change the cursor movement direction by receiving an electric signal corresponding to the click of the direction change button 52, and transmits the decision information to the control unit 56.

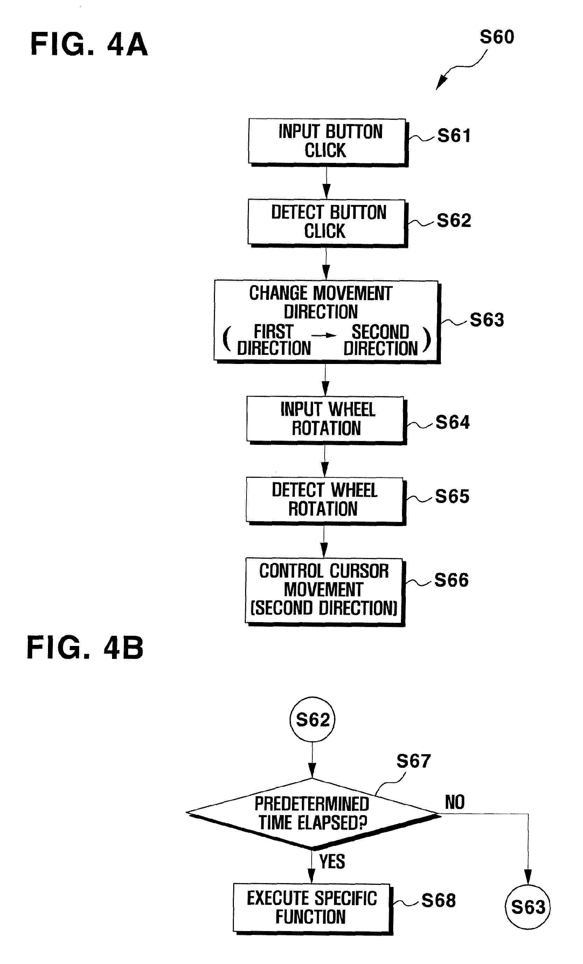

FIG. 4A is a flow chart showing a wheel input method 60 using the wheel input device 50 illustrated in FIG. 3.

The wheel input method 60 includes a button click input step S61, a button click detecting step S62, a movement direction changing step S63, a wheel rotation input step S64, a wheel rotation detecting step S65, and a cursor movement control step S66.

Referring to FIGs. 3 and 4A, a user inputs a button click by pushing the direction change button 52 to start the operation of the mobile terminal in step S61. In step S62, the button click sensor 55 detects the button click, and outputs an electric signal by converting the click to the electric signal. In step S63, the movement direction decision unit 57 decides to change the cursor movement direction from a first direction (for example, an up/down direction) to a second direction (for example, a right/left direction) by receiving the output from the button click sensor 55, and transmits the decision information to the control unit 56.

Subsequently, if the user inputs a wheel rotation by rotating the scroll wheel 51 in step S64, the wheel rotation sensor 53 detects the rotation and outputs an electric signal by converting the rotation to the electric signal in step S65. In step S66, the control unit 56 receives the output from the wheel rotation sensor 53, and controls the cursor movement in the second direction according to the movement direction decided by the movement direction decision unit 57.

If the direction change button 52 is pushed once again, the movement direction decision unit 57 changes the cursor movement direction to the first direction. Subsequently, if the scroll wheel 51 is rotated, the control unit 56 controls the cursor movement in the first direction.

FIG. 4B is a flow chart showing a modified example of the method shown in FIG. 4A.

As shown in FIG. 4B, in the above wheel input method, an elapsed time checking step S67 and specific function performing step S68 may be inserted between the click detecting step S62 of the direction change button 52 and the movement direction changing step S63.

After performing the click detecting step S62, the button click sensor 55 identifies whether the button click input has continued for a predetermined time in step S67. That is, the button click sensor 55 identifies whether the user has pushed the direction change button 52 for an extended time. If the button click input has not continued for a predetermined time (i.e. if the user has pushed the direction change button for a short time), the movement direction changing step S63 follows. If the button click input has continued for the predetermined time (i.e. if the user has pushed the direction change button for an extended time), a preset specific function is performed in step S68. For example, a function of canceling the previous operation may be used as the specific function.

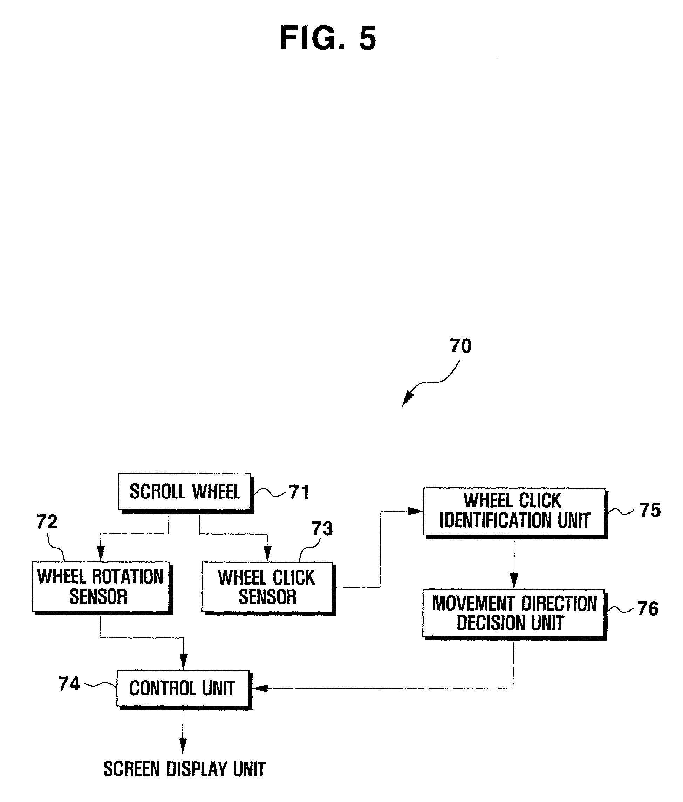

FIG. 5 is a block diagram showing a configuration of a wheel input device 70 according to another example the present invention

The wheel input device 70 includes a scroll wheel 71, wheel rotation sensor 72, wheel click sensor 73, control unit 74, wheel click identification unit 75, and movement direction decision unit 76.

Compared to the wheel input device 50 of FIG. 3, the wheel input device 70 does not include a direction change button and a button click sensor. Instead, the wheel input device 70 includes a wheel click identification unit 75.

The scroll wheel 71 has the same structure and function as scroll wheels 21 and 41 shown in corresponding FIGs. 1 and 2. The wheel rotation sensor 72 and wheel click sensor 73 are installed in a main body of a terminal, and have a conventional structure to perform individual specific functions. The wheel rotation sensor 72 and wheel click sensor 73 detect rotation and clicks of the scroll wheel 71, and output electric signals by converting the rotation and clicks to the electric signals.

The electric signals output by the wheel rotation sensor 72 are transmitted directly to the control unit 74. The electric signals output by the wheel click sensor 73 are transmitted to the control unit 74 through the wheel click identification unit 75 and movement direction decision unit 76.

The wheel click identification unit 75 identifies the type of a click input of the scroll wheel 71. The click input types may include a short click, a long click, and a double click, and different functions are allocated to individual types of click. For example, a movement direction change function may be allocated to the short click, and a confirmation function may be allocated to the long click or the double click.

The above allocating method between the scroll wheel 71 and the type of click has been described as an example. However, the present invention is not limited to this method. As another example, a movement direction change function, confirmation function, and cancellation function may be allocated, respectively, to the short click, long click, and double click. Alternatively, a confirmation function, movement direction change function, and another specific function may be allocated, respectively, to the short click, long click, and double click.

The movement direction decision unit 76 receives an electric signal from the wheel click identification unit 75, decides the cursor movement direction, and transmits the decision information to the control unit 74 if the electric signal is a click type allocated with a movement direction change.

The control unit 74 controls the cursor movement by receiving an electric signal corresponding to the rotation of the scroll wheel 71. Additionally, when a click input of the scroll wheel 71 is performed, the control unit 74 performs a specific function by receiving the corresponding electric signal, information on the click type, and information on the decision of movement direction. For example, the cursor movement direction can be controlled to be changed when a short click of the scroll wheel 71 occurs, and a confirmation function (for example, selection or execution of the corresponding item) can be performed when a long click or double click occurs.

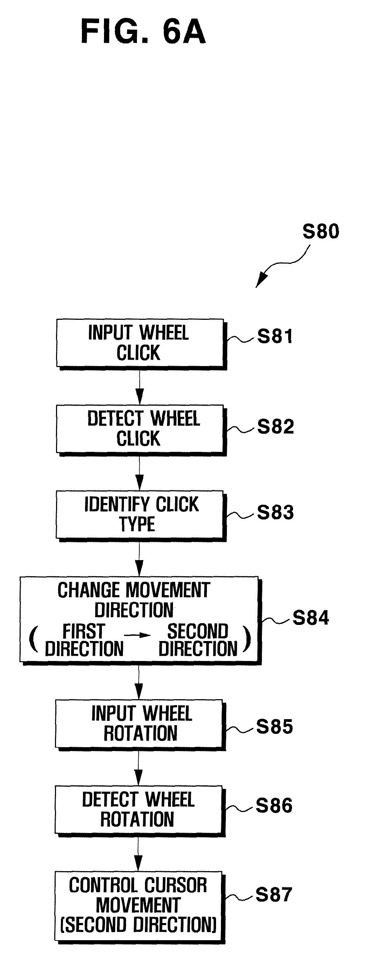

FIG. 6A is a flow chart showing a wheel input method 80 using the wheel input device 70 illustrated in FIG. 5.

The wheel input method 80 includes a wheel click input step S81, wheel click detecting step S82, click type identification step S83, movement direction changing step S84, wheel rotation input step S85, wheel rotation detecting step S86, and cursor movement control step S87.

Referring to FIGS. 5 and 6A, if a user inputs a wheel click by pushing the scroll wheel 71 in step S81, the wheel click sensor 73 detects the wheel click input, and outputs an electric signal by converting the input to the electric signal in step S82. The wheel click identification unit 75 identifies the type of wheel click input, and transmits the click type information to the movement direction decision unit 76 in step S83. In step S84, the movement direction decision unit 76 decides to change the cursor movement direction from a first direction (for example, an up/down direction) to a second direction (for example, a right/left direction) when a click type (for example, a short click) allocated with a movement direction change occurs, and transmits the decision information to the control unit 74.

Subsequently, if the user inputs a wheel rotation by rotating the scroll wheel 71 in step S85, the wheel rotation sensor 72 detects the rotation and outputs an electric signal by converting the rotation to the electric signal in step S86. In step S87, the control unit 74 receives the output from the wheel rotation sensor 72, and controls the cursor movement in the second direction according to the movement direction decided by the movement direction decision unit 76.

If the scroll wheel 71 is short-clicked once again, when a click type allocated with a movement direction change occurs, the movement direction decision unit 76 changes the cursor movement direction to the first direction. Subsequently, if the scroll wheel 71 is rotated, the control unit 74 controls the cursor movement in the first direction.

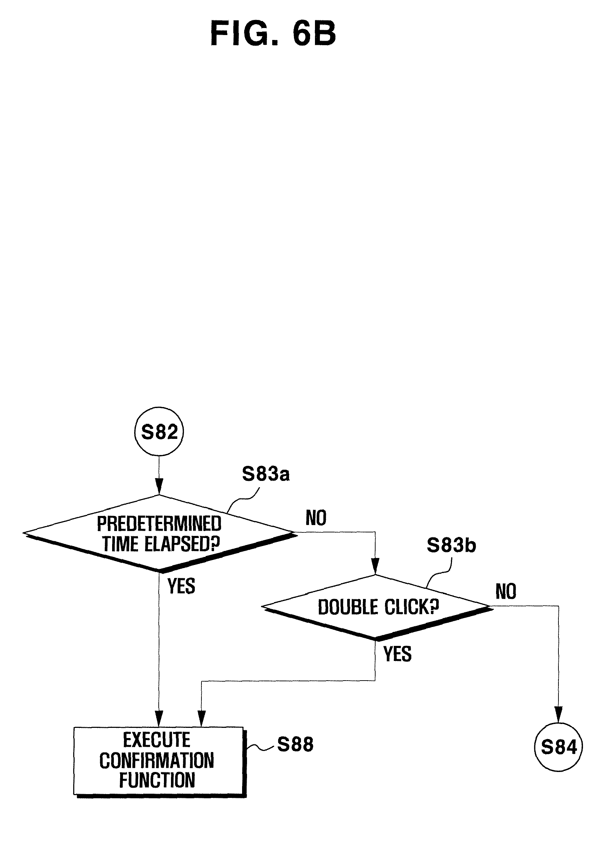

FIG. 6B is a detailed flow chart showing the step S83 of identifying a click type illustrated in FIG. 6A.

After performing the click identification step S82, the wheel click identification unit 75 identifies whether the wheel click input has continued for a predetermined time in step S83a. That is, the wheel click identification unit 75 identifies whether the user has pushed the scroll wheel 71 for an extended time. If the wheel click input has not continued for a predetermined time (i.e. if the user has pushed the scroll wheel for a short time), the wheel click identification unit 75 checks whether the wheel click input is a double click in step S83b. That is, the wheel click identification unit 75 identifies whether the user has double clicked the scroll wheel. If the click input is not a double click, the movement direction change step S84 follows. If the button click input has continued for the predetermined time (i.e. if the user has pushed the direction change button for an extended time) in step S83a or if a double click is input (i.e. if the user has clicked the scroll wheel two times) in step S83a, a preset specific function (for example, a confirmation function) is performed in step S88.

As described above, compared to a conventional wheel key operating only as an up/down direction key and a confirmation key, the present invention has an advantage of providing a four-way key stroke by adding a movement change button or by enabling a function of a right/left direction key by a click identification unit.

Additionally, the present invention provides space saving and effective key arrangement, because a wheel input device may simply be disposed at the front surface or at a side surface of a terminal by replacing four conventional direction keys disposed at the front surface of a terminal.

Further, the present invention has an effect that the wheel input device may be conveniently used even in an operating system or application program having an interface incompatible with a wheel key, without changing the operating system or the application programs.

Although preferred embodiments of the present invention have been described in detail hereinabove, it should be understood that many variations and/or modifications of the basic inventive concept herein described, which may appear to those skilled in the art, will still fall within the spirit and scope of the preferred embodiments of the present invention as defined in the appended claims.

## Claims

1. A wheel input device installed in a main body of a portable terminal, comprising:
a scroll wheel rotating in an up/down direction and being pushed towards the main body by applying a force, wherein a portion of the scroll wheel is mounted in the main body and another portion of the scroll wheel protrudes outside the main body; and
a direction change button for controlling a directional property of the scroll wheel, wherein the direction change button is located adjacent to the scroll wheel and a portion of the direction change button protrudes outside the main body.

2. The wheel input device of claim 1, further comprising:
a wheel rotation sensor for detecting and outputting a rotation input of the scroll wheel;
a wheel click sensor for detecting and outputting a click input of the scroll wheel;
a button click sensor for detecting and outputting a click input of the direction change button;
a control unit for controlling movement of a cursor or performing a specific function corresponding to the outputs from the wheel rotation sensor and the wheel click sensor; and
a movement direction decision unit for deciding to change a movement direction of the cursor corresponding to the output from the button click sensor, and transmitting the decision information on the movement direction to the control unit.

3. The wheel input device of claim 1, wherein the scroll wheel and the direction change button are installed at a front surface or a side surface of the main body.

4. The wheel input device of claim 2, wherein control unit controls the movement direction of the cursor in a first direction by receiving the output of the wheel rotation sensor, and controls the movement direction of the cursor in a second direction by receiving the decision information on the movement direction from the movement direction decision unit.

5. The wheel input device of claim 4, wherein the first direction is the up/down direction, and the second direction is the right/left direction.

6. The wheel input device of claim 2, wherein the scroll wheel and the direction change button are installed at a front surface or a side surface of the main body.

7. A wheel input method for a portable terminal having a scroll wheel and a direction change button, comprising the steps of:
inputting a button click with the direction change button;
detecting and outputting the button click input with a button click sensor;
deciding to change a movement direction of a cursor from a first direction to a second direction according to reception of an output from the button click sensor by a movement direction decision unit, and transmitting the decision information to a control unit;
inputting wheel rotation with the scroll wheel;
detecting and outputting the wheel rotation input with a wheel rotation sensor; and
controlling, by the control unit, the cursor movement in the second direction according to the movement direction decided by the movement direction decision unit based on the received output of the wheel rotation sensor.

8. The wheel input method of claim 7, further comprising, between the step of detecting and outputting the button click input and the step of deciding to change the movement of a cursor:
identifying with the button click sensor whether the button click input has continued for a predetermined time; and
performing, if the button click input has continued for the predetermined time, a specific function by the control unit.

9. The wheel input method of claim 8, wherein, if the button click input has not continued for the predetermined time, the step of deciding to change the movement direction of a cursor is performed.

10. The wheel input method of claim7, wherein the first direction is the up/down direction, and the second direction is the right/left direction.

11. The wheel input method of claim 7, further comprising, after the step of controlling the cursor movement, the step of deciding, if a button click is input again with the direction change button, to change the cursor movement direction from the second direction to the first direction with the movement direction decision unit.

12. A wheel input device installed in a main body of a portable terminal, comprising:
a scroll wheel rotating in the up/down direction and being pushed towards the main body by applying a force, wherein a portion of the scroll wheel is mounted in the main body and another portion of the scroll wheel protrudes outside the main body;
a wheel rotation sensor for detecting and outputting a rotation input of the scroll wheel;
a wheel click sensor for detecting and outputting a click input of the scroll wheel;
a wheel click identification unit for identifying a click input type by receiving the output from the wheel click sensor;
a movement direction decision unit for deciding , if the click input from the wheel click identification unit is a click type allocated with a movement direction change, to change a cursor movement direction and transmitting the decision information on the movement direction; and
a control unit for controlling the cursor movement or performing a specific function corresponding to the outputs from the wheel rotation sensor, wheel click identification unit, and movement direction decision unit.

13. The wheel input device of claim 12, wherein the click type includes a short click, long click, and double click.

14. The wheel input device of claim 12, wherein the click type allocated with the movement direction change is selected from one of a short click, long click, and double click.

15. The wheel input device of claim 12, wherein the scroll wheel is installed at the front surface or a side surface of the main body.

16. The wheel input device of claim 12, wherein the control unit controls the cursor movement in a first direction by receiving the output of the wheel rotation sensor, and controls the movement direction of the cursor in a second direction by receiving the decision information on the movement direction from the movement direction decision unit.

17. The wheel input device of claim 16, wherein the first direction is the up/down direction, and the second direction is the right/left direction.

18. A wheel input method for a portable terminal having a scroll wheel, comprising the steps of:
inputting a wheel click with the scroll wheel;
detecting and outputting the wheel click input with a wheel click sensor;
identifying a type of the wheel click input by a wheel click identification unit according to reception of the output from the wheel click sensor, and transmitting the click type information to a movement direction decision unit;
deciding, by the movement direction decision unit, to change a cursor movement direction from a first direction to a second direction and transmitting the decision information to a control unit, if the click type is a click allocated with a movement direction change;
inputting wheel rotation with the scroll wheel;
detecting and outputting the wheel rotation input with a wheel rotation sensor; and
controlling the cursor movement in the second direction by the control unit according to reception of the output from the wheel rotation sensor and of the decision information on the movement direction from the movement direction decision unit.

19. The wheel input method of claim 18, wherein the step of identifying the type of the wheel click input comprises:
identifying with the wheel click identification unit whether the wheel click input has continued for a predetermined time; and
checking, if the wheel click input has not continued for the predetermined time, whether a double click is input.

20. The wheel input method of claim 19, wherein, if the wheel click input is not a double click, the step of deciding to change the cursor movement direction is performed.

21. The wheel input method of claim 19, further comprising performing, if the wheel input has continued for the predetermined time, a specific function by the control unit.

22. The wheel input method of claim 18, wherein, in the step of identifying the type of the wheel input click input, the click type information includes a short click, long click, and double click.

23. The wheel input method of claim 18, wherein, in the step of deciding to change the cursor movement direction, the click type allocated with a movement direction change is selected from one of a short click, long click, and double click.

24. The wheel input method of claim 18, wherein the first direction is the up/down direction, and the second direction is the right/left direction.

25. The wheel input method of claim 18, further comprising, after the step of controlling the cursor movement, deciding, if a wheel click is input again by the scroll wheel and the wheel click type is the click allocated with the movement direction change, to change the cursor movement direction from the second direction to the first direction by the movement direction decision unit.
